# EUROPEAN PATENT SPECIFICATION

(11) **EP 2 709 112 B1**
(45) Date of publication and mention of the grant of the patent: **15.11.2017**
(21) Application number: 13184070.4
(22) Date of filing: 12.09.2013
(51) Int. Cl.: G21C 9/012, G21C 9/004, G21C 15/18, G21D 1/02, G21D 3/04, G21C 15/12

(54) **Method and system for an alternate reactor pressure vessel energy removal path**
Verfahren und System für einen alternativen Reaktordruckbehälter-Energieableitungspfad
Procédé et système pour trajet d'élimination d'énergie alternatif de cuve de réacteur

(30) Priority: 13.09.2012 US 201213613281
(43) Date of publication of application: 19.03.2014
(73) Proprietor: GE-Hitachi Nuclear Energy Americas LLC, Wilmington, NC 28401 (US)
(72) Inventor: Bass, John R., Wilmington, NC 28401 (US); Ginsberg, Robert Joseph, Wilmington, NC 28401 (US)
(74) Representative: Williams, Andrew Richard

(56) References cited:
- DE-C1- 3 643 929
- JP-A- S6 036 987
- JP-A- H05 157 877
- US-A- 5 106 571
- US-A- 5 120 490

## Description

### BACKGROUND OF THE INVENTION

### Field of the Invention

Example embodiments relate generally to nuclear reactors, and more particularly to an alternate reactor pressure vessel (RPV) energy removal path. The alternate energy path may provide emergency steam extraction without the use of external electric power.

### Related Art

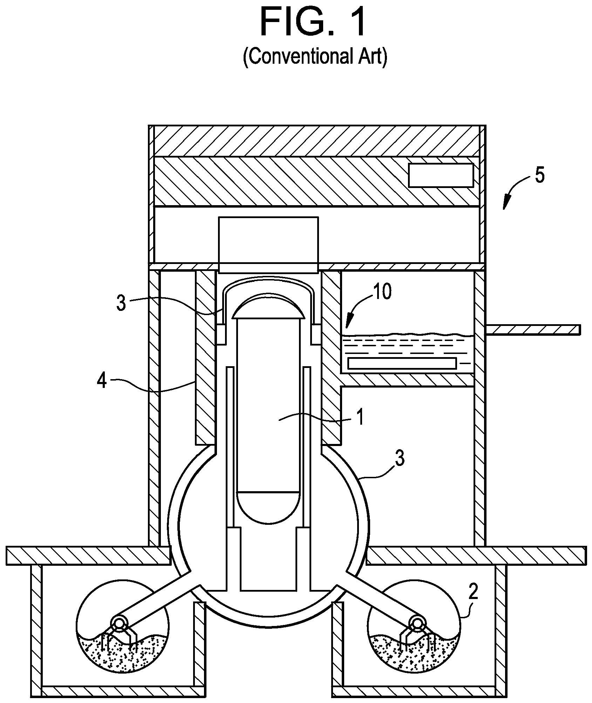

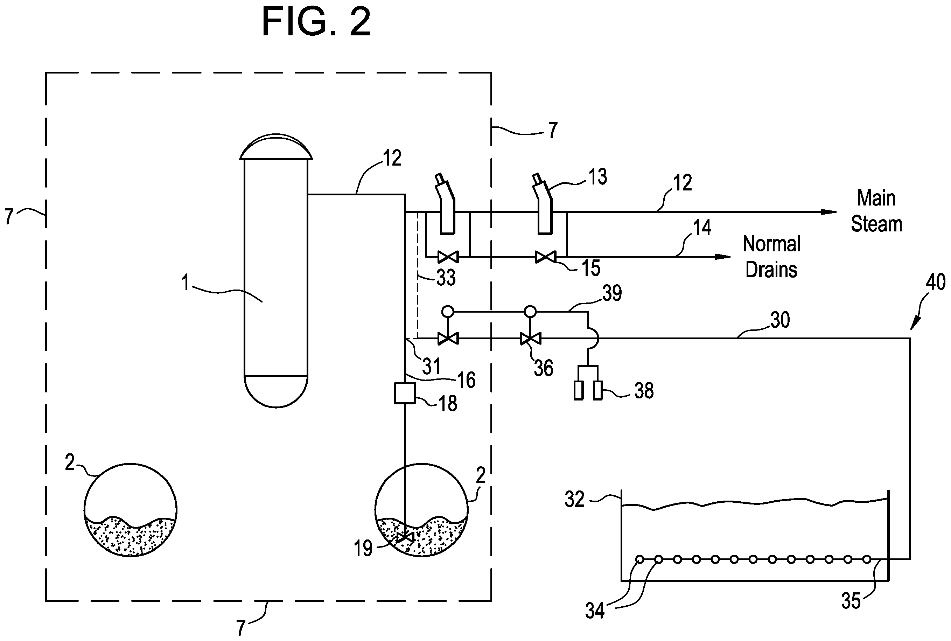

FIG. 1 is a cut-away view of a conventional boiling water nuclear reactor (BWR) reactor building 5 (it should be noted that example embodiments may be applied to other light water reactors, other than a BWR, such as a pressurized water reactor, or PWR). The reactor pressure vessel (RPV) 1 is located near the middle of the reactor building 5 and surrounded by a primary containment boundary (the primary containment boundary consisting of portions of a steel primary containment vessel 3, a concrete shell 4 and a steel suppression pool 2). During RPV 1 over-pressurization, safety / relief valves (SRVs) 18 (see FIG. 2) in a SRV steam line 16 may be opened to allow high pressure steam from the RPV 1 to discharge into quenchers 19 located in the suppression pool 2. This may be done to limit RPV 1 pressure, especially in the case of a plant emergency. The suppression pool 2 is an extension of the steel primary containment vessel 3 that may be a torus shaped pool located below the RPV 1. Because the suppression pool 2 contains a large body of water, it may act as a heat sink to cool and condense the steam that is discharged through the quenchers 19.

In addition to the suppression pool 2, a RPV main steam line 12 may also be used to extract large amounts of steam when main steam isolation valves (MSIVs) 13 are opened (though the MSIVs 13 require external electrical power to operate). Conventionally, drain valves 15 for the MSIVs 13 may also be opened (via the use of external electrical power required to operate the drain valves 15), allowing the drain lines 14 to also discharge high pressure steam from the RPV 1. JPH05157877 relates to a containment heat removal system and discloses the features according to the preamble of claim 1. US5106751 discloses a similar containment heat removal system, however provided with only one isolation valve.

### SUMMARY OF INVENTION

Example embodiments provide a method and system for an alternate energy removal path for the reactor pressure vessel (RPV) of a light water reactor. The energy may be removed from the RPV without the use of external electrical power.

In a first aspect, an alternate reactor pressure vessel energy removal system is provided in accordance with claim 1. In a second aspect, a method of making an alternate reactor pressure vessel energy removal system is provided in accordance with claim 6. In a third aspect, a method of using the alternate reactor pressure vessel energy removal system of the first aspect is provided in accordance with claim 11.

### BRIEF DESCRIPTION OF THE DRAWINGS

The above and other features and advantages of example embodiments will become more apparent by describing in detail, example embodiments with reference to the attached drawings. The accompanying drawings are intended to depict example embodiments and should not be interpreted to limit the intended scope of the claims. The accompanying drawings are not to be considered as drawn to scale unless explicitly noted.
FIG. 1 is a cut-away view of a conventional boiling water nuclear reactor (BWR) reactor building;
FIG. 2 is a one-line diagram of a system, in accordance with an example embodiment;
FIG. 3 is a flowchart of a method of making a system, in accordance with an example embodiment; and
FIG. 4 is a flowchart of a method of using a system, in accordance with an example embodiment.

### DETAILED DESCRIPTION

Detailed example embodiments are disclosed herein. However, specific structural and functional details disclosed herein are merely representative for purposes of describing example embodiments. Example embodiments may, however, be embodied in many alternate forms and should not be construed as limited to only the embodiments set forth herein.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but to the contrary, example embodiments are to cover all modifications, equivalents, and alternatives falling within the scope of example embodiments. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it may be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between", "adjacent" versus "directly adjacent", etc.).

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

FIG. 2 is a one-line diagram of a system 40, in accordance with an example embodiment. The system 40 may include an alternate reactor pressure vessel (RPV) energy removal line (a steam extraction line) 30 that discharges into a large heat sink (a large body of water), such as the condenser hotwell 32, located outside of the primary containment 7 (the primary containment 7 consisting of portions of a steel primary containment vessel 3, a concrete shell 4 and a steel suppression pool 2, as shown in FIG. 1). In particular, the alternate RPV energy removal line 30 may be connected to a quencher pipe 35 in the condenser hotwell 32, and steam discharging through the quencher pipe 35 may exit pipe 35 via a number of quencher holes 34 (that may be used to effectively dissipate the discharged steam throughout the volume of the condenser hotwell 32). The quencher pipe 35 may be located along the bottom of the condenser hotwell 32, to maximize the heat exchange between the discharging steam (exiting through the quencher holes 34) and the cool water in the condenser hotwell 32. The alternate RPV energy removal line 30 may be a 10.16 to 15.24 cm (4 to 6 inch) diameter pipe, or another size of pipe that may be large enough to remove the necessary amount of heat from the RPV 1. Having the alternate RPV energy removal line 30 discharge excess steam from the RPV 1 into the condenser hotwell 32 allows the excess steam to be cooled, condensed, and scrubbed of radiation, to safely and effectively reduce excess pressure and heat energy that is located in the RPV 1.

The alternate RPV energy removal line 30 may be connected to either a SRV steam extraction line 31 (connected to the SRV steam line 16, upstream of the SRV valves 18), or a RPV main steam extraction line 33 (connected to the RPV main steam line 12, upstream of the MSIVs 13). Two containment isolation valves 36 (one located inside the primary containment boundary 7, and one located outside of primary containment 7) may be located in the alternate RPV energy removal line 30 piping, in order to open or close the alternate RPV energy removal line 30. A pressurized gas source 38 (such as pressurized gas bottles, or preferably nitrogen bottles) may provide control gas via a pressure control line 39. By locating the gas source 38 in a remote location, relative to the primary containment boundary 7 (and relative to RPV 1), the gas source 38 may be used by plant personnel to remotely operate the manually operated containment isolation valves 36 without exposing personnel to the RPV 1 or primary containment 7 (in the case of a serious plant accident). Because the containment isolation valves 36 may be opened via the force of the pressurized gas source 38, no external electrical power is necessary to operate the system 40 (which is ideal during a plant accident when plant electrical power may be disrupted).

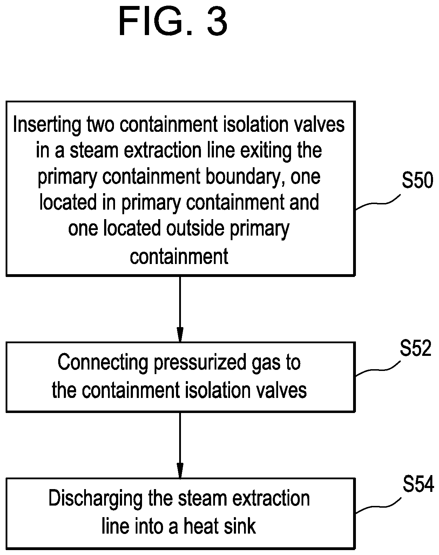

FIG. 3 is a flowchart of a method of making a system 40, in accordance with an example embodiment. In step S50, two manually operated containment isolation valves 36 may be inserted into the alternate RPV energy removal line (steam extraction line) 30. One containment isolation valve 36 may be located in the primary containment 7, and the other may be located outside of the primary containment 7. The alternate RPV energy removal line 30 may discharge excess steam from the RPV 1, as discussed above.

In step S52, a pressurized gas source 38, such as pressurized gas bottles 38, may be connected to the containment isolation valves 36. The gas source 38 may be located in a position that is remotely located from primary containment 7, to ensure the safe operation of the system 40 without personnel exposure to the primary containment 7 (in the event of a serious plant accident).

In step S54, the alternate RPV energy removal line 30 may be connected to a heat sink, such as the condenser hotwell 32, located outside of primary containment 7. The discharge of excess steam from RPV 1 into the condenser hotwell 32 will allow the steam to be cooled, condensed, and scrubbed of radiation, to safely and effectively reduce excess pressure and heat energy that is located in the RPV 1.

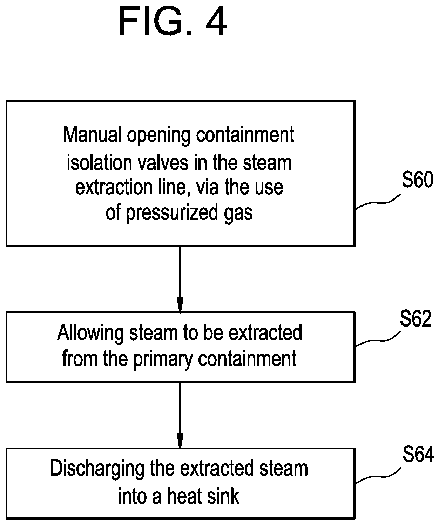

FIG. 4 is a flowchart of a method of using the system 40 shown in FIG. 2, in accordance with an example embodiment. Specifically, step S60 may include manually opening the containment isolation valves 36 in the alternate RPV energy removal line (steam extraction line) 30. This may be accomplished using the pressurized gas source 38 that is connected to the containment isolation valves 36.

In step S62, excess steam may be allowed to exit the RPV 1 and primary containment 7 via the alternate RPV energy removal line 30 (due to the opening of the containment isolation valves 36). In step S64, the extracted steam in the alternate RPV energy removal line 30 may be discharged into the heat sink (such as the condenser hotwell) 32, located outside of primary containment 7. The extracted steam may safely and effectively cooled, condensed, and scrubbed of radiation, by being discharged into the heat sink 32, thereby lowering excess pressure that may have otherwise built up in the RPV 1. No external electric power is required to perform the method shown in FIG. 4.

Example embodiments having thus been described, it will be obvious that the same may be varied in many ways. Such variations are not to be regarded as a departure from the intended scope of example embodiments, and all such modifications as would be obvious to one skilled in the art are intended to be included within the scope of the following claims.

## Claims

1. An alternate reactor pressure vessel, RPV, energy removal system (40), comprising:
a steam extraction line (30), fluidly connected to a RPV and a heat sink (32), the heat sink being located outside of primary containment (7);
**characterised in that**:
the system further comprises a first and a second manually operated containment isolation valve (36) in the steam extraction line, the first containment isolation valve being located within the primary containment (7), the second containment isolation valve being located outside of the primary containment (7);
at least one pressurized gas source (38) connected to the first and second containment isolation valves (36) via a pressure control line (39), the at least one pressurized gas source being configured to produce pressurized gas to manually open and close the first and second containment isolation valves.

2. The alternate RPV energy removal system (40) of claim 1, wherein the at least one pressurized gas source (38) is positioned in a location that is remote from the primary containment (7).

3. The alternate RPV energy removal system (40) of either of claim 1 or 2, wherein the steam extraction line (30) is connected to one of a safety/relief valve, SRV, steam line (16) upstream of SRVs (18) and a RPV main steam line (12) upstream of main steam isolation valves (13).

4. The alternate RPV energy removal system (40) of any preceding claim, wherein the heat sink is a condenser hotwell.

5. The alternate RPV energy removal system (40) of claim 4, further comprising:
a quencher pipe (35) located along a bottom floor of the hotwell, the quencher pipe being connected to the steam extraction line (30);
quencher holes (34) located along the quencher pipe.

6. A method of making an alternate reactor pressure vessel, RPV, energy removal system (40), comprising:
fluidly connecting a steam extraction line (30) to a RPV and a heat sink (32), the heat sink being located outside of primary containment (7); and
inserting first and second manually operated containment isolation valves (36) in the steam extraction line, the first containment isolation valve being located within the primary containment (7), the second containment isolation valve being located outside of the primary containment;
connecting at least one pressurized gas source (38) to the first and second containment isolation valves (36) via a pressure control line (39), the at least one pressurized gas source being configured to produce pressurized gas to manually open and close the first and second containment isolation valves.

7. The method of claim 6, further comprising:
positioning the at least one pressurized gas source (38) to be in a location that is remote from the primary containment (7).

8. The method of either of claim 6 or 7, further comprising:
connecting the steam extraction line (30) to one of a safety/relief valve, SRV, steam line (16) upstream of SRVs (18) and a RPV main steam line (12) upstream of main steam isolation valves (13).

9. The method of any of claims 6 to 8, wherein the heat sink (32) is a condenser hotwell.

10. The method of claim 9, further comprising:
providing a quencher pipe (35) along a bottom floor of the hotwell;
inserting quencher holes (34) along the quencher pipe; and
connecting the steam extraction line (30) to the quencher pipe.

11. A method of using the alternate RPV energy removal system (40) of claim 1 or any claim dependent thereon, comprising:
manually opening (S60) the first and second containment isolation valves (36) using the at least one pressurized gas source (38).

12. The method of claim 11, further comprising:
allowing steam (S62) to be discharged from the RPV to the heat sink (32) through the steam extraction line (30).

## Patentansprüche

1. System (40) für eine alternative Reaktordruckbehälter-, RPV-, Energieableitung, umfassend:
eine Dampfextraktionsleitung (30), die mit einem RPV und einer Wärmesenke (32) fluidisch verbunden ist, wobei die Wärmesenke außerhalb einer primären Hülle (7) angeordnet ist;
**dadurch gekennzeichnet, dass** das System ferner umfasst: ein erstes und ein zweites manuell betriebenes Hüllenisolierungsventil (36) in der Dampfextraktionsleitung, wobei das erste Hüllenisolierungsventil innerhalb der primären Hülle (7) angeordnet ist, wobei das zweite Hüllenisolierungsventil außerhalb der primären Hülle (7) angeordnet ist;
mindestens eine Druckgasquelle (38), die mit dem ersten und zweiten Hüllenisolierungsventil (36) über eine Drucksteuerleitung (39) verbunden ist, wobei die mindestens eine Druckgasquelle ausgelegt ist, Druckgas zu erzeugen, um das erste und zweite Hüllenisolierungsventil manuell zu öffnen und zu schließen.

2. System (40) für eine alternative RPV-Energieableitung nach Anspruch 1, wobei die mindestens eine Druckgasquelle (38) an einem Ort positioniert ist, der von der primären Hülle (7) entfernt ist.

3. System (40) für eine alternative RPV-Energieableitung nach einem der Ansprüche 1 oder 2, wobei die Dampfextraktionsleitung (30) mit einer von einer Sicherheits/Entlastungsventil-, SRV-, Dampfleitung (16) stromaufwärts von SRVs (18) und einer RPV-Hauptdampfleitung (12) stromaufwärts von Hauptdampfisolierungsventilen (13) verbunden ist.

4. System (40) für eine alternative RPV-Energieableitung nach einem der vorhergehenden Ansprüche, wobei die Wärmesenke ein Kondensat-Hotwell ist.

5. System (40) für eine alternative RPV-Energieableitung nach Anspruch 4, ferner umfassend:
ein Quencher-Rohr (35), das entlang eines unteren Bodens des Hotwells angeordnet ist, wobei das Quencher-Rohr mit der Dampfextraktionsleitung (30) verbunden ist;
Quencher-Löcher (34), die entlang des Quencher-Rohrs angeordnet sind.

6. Verfahren zur Herstellung eines Systems (40) für eine alternative Reaktordruckbehälter-, RPV-, Energieableitung, umfassend:
fluidisches Verbinden einer Dampfextraktionsleitung (30) mit einem RPV und einer Wärmesenke (32), wobei die Wärmesenke außerhalb einer primären Hülle (7) angeordnet ist; und
Einsetzen eines ersten und zweiten manuell betriebenen Hüllenisolierungsventils (36) in die Dampfextraktionsleitung, wobei das erste Hüllenisolierungsventil innerhalb der primären Hülle (7) angeordnet ist, wobei das zweite Hüllenisolierungsventil außerhalb der primären Hülle angeordnet ist;
Verbinden mindestens einer Druckgasquelle (38) mit dem ersten und zweiten Hüllenisolierungsventil (36) über eine Drucksteuerleitung (39), wobei die mindestens eine Druckgasquelle ausgelegt ist, Druckgas zu erzeugen, um das erste und zweite Hüllenisolierungsventil manuell zu öffnen und zu schließen.

7. Verfahren nach Anspruch 6, ferner umfassend:
Positionieren der mindestens einen Druckgasquelle (38), um an einem Ort zu sein, der von der primären Hülle (7) entfernt ist.

8. Verfahren nach einem der Ansprüche 6 oder 7, ferner umfassend:
Verbinden der Dampfextraktionsleitung (30) mit einer von einer Sicherheits/Entlastungsventil-, SRV-, Dampfleitung (16) stromaufwärts von SRVs (18) und einer RPV-Hauptdampfleitung (12) stromaufwärts von Hauptdampfisolierungsventilen (13).

9. Verfahren nach einem der Ansprüche 6 bis 8, wobei die Wärmesenke (32) ein Kondensat-Hotwell ist.

10. Verfahren nach Anspruch 9, ferner umfassend:
Bereitstellen eines Quencher-Rohrs (35) entlang eines unteren Bodens des Hotwells;
Einsetzen von Quencher-Löchern (34) entlang des Quencher-Rohrs; und
Verbinden der Dampfextraktionsleitung (30) mit dem Quencher-Rohr.

11. Verfahren zur Verwendung des Systems (40) für eine alternative RPV-Energieableitung nach Anspruch 1 oder einem beliebigen davon abhängigen Anspruch, umfassend:
manuelles Öffnen (S60) des ersten und zweiten Hüllenisolierungsventils (36) unter Verwendung der mindestens einen Druckgasquelle (38).

12. Verfahren nach Anspruch 11, ferner umfassend:
Gestatten (S62), dass Dampf aus dem RPV in die Wärmesenke (32) durch die Dampfextraktionsleitung (30) abgegeben wird.

## Revendications

1. Système d'élimination d'énergie alternatif (40) de cuve de réacteur sous pression RPV, comprenant :
une conduite d'extraction de vapeur (30) en communication fluidique avec une RPV et un puits de chaleur (32), le puits de chaleur étant situé à l'extérieur de l'enceinte de confinement principale (7) ;
**caractérisé en ce que** :
le système comprend en outre une première et une seconde vanne d'isolement d'enceinte de confinement (36) actionnées à la main dans la conduite d'extraction de vapeur, la première vanne d'isolement de l'enceinte de confinement étant située dans l'enceinte de confinement principale (7), la seconde vanne d'isolement de l'enceinte de confinement étant située à l'extérieur de l'enceinte de confinement principale (7) ;
au moins une source de gaz sous pression (38) raccordée à la première et à la seconde vanne d'isolement d'enceinte de confinement (36) via une conduite de commande de pression (39), la au moins une source de gaz sous pression étant configurée pour produire du gaz sous pression afin d'ouvrir et fermer manuellement la première et la seconde vanne d'isolement de l'enceinte de confinement.

2. Système d'élimination d'énergie alternatif de RPV (40) selon la revendication 1, dans lequel la au moins une source de gaz sous pression (38) est positionnée dans un emplacement qui est distant de l'enceinte de confinement principale (7).

3. Système d'élimination d'énergie alternatif de RPV (40) selon l'une ou l'autre des revendications 1 ou 2, dans lequel la conduite d'extraction de vapeur (30) est raccordée à une conduite de vapeur à vannes de sécurité/délestage SRV (16) en amont des SRV (18) et une conduite de vapeur principale de RPV (12) en amont de vannes d'isolement de vapeur principales (13).

4. Système d'élimination d'énergie alternatif de RPV (40) selon l'une quelconque des revendications précédentes, dans lequel le puits de chaleur est un puits de condenseur.

5. Système d'élimination d'énergie alternatif de RPV (40) selon la revendication 4, comprenant en outre :
un tuyau de trempe (35) situé le long d'un plancher inférieur du puits de condenseur, le tuyau de trempe étant raccordé à la conduite d'extraction de vapeur (30) ;
des trous de trempe (34) situés le long du tuyau de trempe.

6. Procédé de fabrication d'un système d'élimination d'énergie alternatif (40) de cuve de réacteur sous pression RPV, comprenant :
le raccordement fluidique d'une conduite d'extraction de vapeur (30) à une RPV et un puits de chaleur (32), le puits de chaleur étant situé à l'extérieur de l'enceinte de confinement principale (7) ; et
l'insertion d'une première et d'une seconde vanne d'isolement d'enceinte de confinement (36) actionnées manuellement dans la conduite d'extraction de vapeur, la première vanne d'isolement de l'enceinte de confinement étant située dans l'enceinte de confinement principale (7), la seconde vanne d'isolement de l'enceinte de confinement étant située à l'extérieur de l'enceinte principale ;
le raccordement d'au moins une source de gaz sous pression (38) à la première et à la seconde vanne d'isolement d'enceinte de confinement (36) via une conduite de commande de pression (39), la au moins une source de gaz sous pression étant configurée pour produire du gaz sous pression afin d'ouvrir et de fermer manuellement la première et la seconde vanne d'isolement de l'enceinte de confinement.

7. Procédé selon la revendication 6, comprenant en outre :
le positionnement de la au moins une source de gaz sous pression (38) pour qu'elle se situe à un emplacement qui est distant de l'enceinte de confinement principale (7).

8. Procédé selon l'une ou l'autre des revendications 6 ou 7, comprenant en outre :
le raccordement de la conduite d'extraction de vapeur (30) à l'une parmi une conduite de vapeur à vannes de sécurité/délestage SRV (16) en amont des SRV (18) et une conduite de vapeur principale de RPV (12) en amont des vannes d'isolement de vapeur principales (13).

9. Procédé selon l'une quelconque des revendications 6 à 8, dans lequel le puits de chaleur (32) est un puits de condenseur.

10. Procédé selon la revendication 9, comprenant en outre :
la fourniture d'un tuyau de trempe (35) le long d'un plancher inférieur du puits de condenseur;
l'insertion de trous de trempe (34) le long du tuyau de trempe ; et
le raccordement de la conduite d'extraction de vapeur (30) au tuyau de trempe.

11. Procédé d'utilisation du système d'élimination d'énergie alternatif de RPV (40) selon la revendication 1 ou selon toute revendication qui en dépend, comprenant :
l'ouverture manuelle (S60) de la première et de la seconde vanne d'isolement d'enceinte de confinement (36) en utilisant la au moins une source de gaz sous pression (38).

12. Procédé selon la revendication 11, comprenant en outre l'étape consistant à :
permettre le déchargement de la vapeur (S62) de la RPV au puits de chaleur (32) à travers la conduite d'extraction de vapeur (30).
